# FASCICULE DE BREVET EUROPEEN

(11) **EP 1 718 572 B1**
(45) Date de publication et mention de la délivrance du brevet: **20.08.2008**
(21) Numéro de dépôt: 05717712.3
(22) Date de dépôt: 14.02.2005
(51) Int. Cl.: C03B 18/20, C03C 4/08, C03C 3/07

(54) **VERRE PLAT AU PLOMB PAR FLOTTAGE SUR UN BAIN DE METAL**
NACH EINEM METALLBAD-FLOATGLAS-VERFAHREN HERGESTELLTES BLEIHALTIGES FLACHGLAS
LEAD-CONTAINING FLAT GLASS PRODUCED BY A METAL BATH FLOAT GLASS PROCESS

(30) Priorité: 16.02.2004 FR 0401499
(43) Date de publication de la demande: 08.11.2006
(73) Titulaire: SAINT-GOBAIN GLASS FRANCE, 92400 Courbevoie (FR)
(72) Inventeur: RODRIGUEZ CUARTAS, Ramon, ST-GOBAIN GLASS ESPANA, E-33400 AVILES (ASTURIAS) (ES); BOUIGEON, Christian, SOVIS OPTIQUE, F-77640 JOUARRE (FR); FERNANDEZ SUAREZ, Juan-Luis, ST-GOBAIN GLASS ESP., E-33400 AVILES (ASTURIAS) (ES)
(74) Mandataire: Colombier, Christian
(86) Numéro de dépôt international: PCT/FR2005/050094
(87) Numéro de publication internationale: WO 2005/080279

(56) Documents cités:
- EP-A- 0 525 555
- EP-A- 0 592 237
- FR-A- 2 774 085
- FR-A- 2 843 107
- US-A- 2 223 118
- US-A- 4 015 966
- US-A- 4 876 480
- US-A- 5 073 524
- US-A- 5 221 646

## Description

L'invention concerne la préparation d'un verre plat riche en oxyde de plomb par flottage sur un bain de métal fondu.

On sait préparer du verre plat du type silicosodocalcique par flottage sur un bain de métal fondu, généralement à base d'étain. Le verre silicosodocalcique a une densité bien inférieure à celle de l'étain (densité de ce verre = environ 2,5, alors que la densité de l'étain fondu est d'environ 7) et le flottage du verre se passe correctement sans que les rouleaux de bord (« top roll » en anglais) n'enfoncent de façon trop prononcée le ruban de verre flottant dans le métal liquide. Afin d'éviter l'oxydation de l'étain, l'atmosphère de l'installation de flottage est habituellement maintenue en milieu réducteur, généralement grâce à la présence d'hydrogène dans l'atmosphère gazeuse au dessus du verre et du métal. Cette atmosphère gazeuse est généralement composée d'azote contenant 7 à 15% en volume d'hydrogène.

Les verres riches en oxyde de plomb dont il est question dans la présente demande contiennent au moins 30% en poids d'oxyde de plomb PbO. Ils trouvent une utilisation plus particulièrement lorsqu'il s'agit d'apporter une protection contre les rayons X, notamment dans le domaine médical ou nucléaire. Ces verres sont destinés à être intégrés dans des cloisons, fenêtres, boîtes de manipulation. Ces verres sont réputés non flottables du fait de leur forte densité s'approchant de celle de l'étain. On redoute en effet que le ruban ne s'enfonce dans le métal fondu de flottage, en particulier sous l'effet des rouleaux de bord, et l'on redoute également un échange entre le plomb du verre et l'environnement de l'installation de flottage, étain, réfractaire ou atmosphère. Un tel échange pourrait conduire à une réduction de l'oxyde de plomb pour faire du plomb métallique, lequel pourrait s'évaporer puis condenser en gouttelettes tombant sur le verre et le marquant (formation de « top lead » à la surface du verre).

Le US 4015966 enseigne bien la difficulté d'imaginer flotter des compositions comprenant des oxydes de plomb, d'antimoine ou d'arsenic à tel point qu'il préconise pour le flottage des compositions absorbant les rayons X ne contenant surtout pas ces oxydes. Ce document préconise également le flottage en atmosphère réductrice. Pour toutes les raisons ci-dessus données, les verres riches en plomb sont habituellement fabriqués en discontinu par fusion « en pôt », suivi d'une coulée sur table puis d'un polissage ou doucissage, pour aboutir à un verre plat. Ce procédé est cependant particulièrement fastidieux et onéreux. On peut réaliser ainsi des verres plats de 6, 8 et 12 mm d'épaisseur. Cependant, on ne sait pas réaliser des verres moins épais comme 3,5 mm d'épaisseur car à de telles fines épaisseur, le verre est trop fragile pour le procédé qui vient d'être décrit.

Le EP525555 enseigne que l'oxyde de plomb dans un verre est à proscrire lorsqu'il s'agit de le flotter. Le EP592237 enseigne que les verres au plomb ne peuvent pas être flottés.

Les US5073524 et US2223118 enseignent des compositions riches en plomb.

Comme autres documents de l'état de la technique, on peut citer : US5221646 et US4876480.

En plus des problèmes ci-dessus mentionnés liés à la présence de plomb dans ces verres, la demanderesse a constaté par des essais de flottage dans des conditions habituelles de flottage des verres silicosodocalciques qu'un voile grisâtre se formait inévitablement à la surface du verre qui était en contact avec l'atmosphère de l'installation de flottage. La demanderesse a découvert que ce voile était une fine couche de plomb métallique et a également découvert que ce voile pouvait être évité en enlevant le caractère réducteur de l'atmosphère gazeuse de l'installation (absence d'hydrogène). Ainsi dans le procédé selon l'invention, on utilise une- atmosphère neutre, c'est-à-dire ni oxydante ni réductrice comme une atmosphère d'azote. En pratique, il est difficile d'atteindre le zéro absolu en oxygène, mais il convient de réduire l'oxygène de l'atmosphère autant que possible pour limiter l'oxydation de l'étain du bain de flottage. L'atmosphère gazeuse dans l'installation de flottage contient de préférence moins de 5 vpm (volume par million) d'oxygène. Elle peut être composée essentiellement d'azote.

En dehors de la composition particulière du verre et de l'atmosphère neutre dans l'installation de flottage, l'installation de flottage en elle-même est identique aux installations de flottage habituellement utilisées pour les verres plus classiques comme ceux du type silicosodocalcique.

L'invention concerne donc un procédé pour la fabrication d'un ruban de verre riche en oxyde de plomb, flotté, selon lequel le ruban, formé sur un bain de métal fondu, même à base d'étain, progresse en flottant sur ce bain, ce ruban étant retiré du bain lorsqu'il est suffisamment solidifié.

Les verres riches en oxyde de plomb dont il est question dans la présente demande contiennent au moins 30% et même au moins 45%, voire même au moins-60% en poids d'oxyde de plomb PbO. Ces verres contiennent généralement jusqu'à 75% et plus particulièrement jusqu'à 70% en poids d'oxyde de plomb PbO. Ces verres peuvent également comprendre de l'oxyde de Baryum BaO, le Baryum étant un élément lourd également capable d'arrêter les rayons X. Le verre peut par exemple comprendre 2 à 20% en poids de BaO. Le verre comprend généralement de la silice à raison de 25 à 35% en poids. Le verre comprend également généralement du K₂O et/ou du Na₂O, la somme de la masse de K₂O et de Na₂O allant généralement de 0,2 à 1% en poids.

Ces verres ont généralement une densité allant de 4 à 6 et plus particulièrement une densité allant de 4,3 à 5,5.

Dans la fabrication d'un ruban de verre flotté en vue de la réalisation de feuilles de verre plat, du verre fondu est déversé sur un bain de métal fondu, généralement d'étain ou d'un alliage à prédominance d'étain, où il forme ledit ruban continu qui se refroidit progressivement et est extrait à l'aide de rouleaux extracteurs qui l'acheminent dans un four de recuisson appelé étenderie. La zone couvrant le ruban de verre lorsque celui-ci défile sur le bain de métal fondu comprend des systèmes de chauffage et des systèmes de refroidissement qui sont prévus pour conditionner la température et plus précisément la viscosité du verre pour permettre son étirage à l'épaisseur voulue puis son figeage.

L'épaisseur du ruban de verre est déterminée par l'effort de traction exercé sur le ruban de verre d'une part par les rouleaux extracteurs et éventuellement d'autre part par l'action de rouleaux de bord moletés, appelés « top roll », qui agissent sur les bords supérieurs du ruban de verre. En effet, pour une tirée donnée, c'est à dire pour une quantité de verre sortant du four par unité de temps donnée, l'épaisseur du ruban de verre flotté est fonction de la vitesse dudit ruban de verre dans l'étenderie.

Durant le défilement du ruban de verre sur le bain de métal fondu, ledit ruban va donc subir un étirage pour diminuer son épaisseur. Cet étirage est obtenu pour des tirées comprises entre 2 et 200 tonnes par jour et plus particulièrement 5 et 100 tonnes par jour avec des vitesses du ruban comprises entre 0,1 et 20 mètres par minute et plus particulièrement 0,2 et 10 mètres par minute. Il est par ailleurs connu que de telles vitesses du ruban de verre défilant sur le bain de métal fondu provoquent sous ledit ruban un courant d'étain dirigé vers l'extrémité de sortie du bain plus froide, que l'on peut qualifier de courant aval. Le métal entraîné par le ruban suivant ce courant aval vient buter sur la paroi de sortie du bain puis par réflexion, il forme un courant de retour dirigé vers l'amont du bain, que l'on peut qualifier de courant amont. Ce courant amont est particulièrement important entre les bords du ruban de verre et les parois latérales du bain. Afin de limiter l'effet de ce courant amont, on peut équiper le bain de barrages comme proposé par US 4217125. On peut également équiper le bain de circuits de recirculation de l'étain de l'aval vers l'amont du bain par des canalisations extérieures au bain (voir GB1166648, US3658504) ou même intérieure au bain (voir abrégé de JP59121125, US3790361).

Ainsi l'invention concerne un procédé de fabrication de verre plat riche en oxyde de plomb comprenant le flottage en continu dans une installation de flottage à l'atmosphère gazeuse neutre, d'un verre comprenant au moins 30 % en poids d'oxyde de plomb sur un bain d'un métal fondu à la densité supérieure à celle du verre.

Pour le cas où de l'oxyde d'étain se formerait tout de même lentement en raison d'une pollution même légère de l'atmosphère par de l'oxygène, on peut prévoir un moyen d'élimination de cet oxyde qui flotte en surface du bain métallique. Ce moyen d'élimination peut être un dispositif d'élimination des solides flottant comme des poches latérales en aval du bain (« skim pockets ») ou le dédrosseur (« dedrossing ») décrit dans US4046549. Ce moyen peut également faire intervenir une recirculation de l'étain par une canalisation extérieure passant par une unité de purification destinée à éliminer ou réduire l'oxyde d'étain formé, par exemple par barbotage d'hydrogène comme décrit dans FR 1323711, suivi d'une élimination de l'hydrogène avant réintroduction .

Par ailleurs, de façon à éliminer d'autres métaux comme le fer, on peut également effectuer un barbottage avec de la vapeur d'eau

Si l'on fait circuler l'étain en dehors de l'installation pour le traiter, on peut également le traiter pour éliminer son fer. Cette élimination du fer est souhaitée car une trop forte concentration en fer dans l'étain conduit à la formation de particules solides d'un alliage Fer/étain qui viennent s'incruster dans la face de contact du verre avec le bain produisant autant de défauts. Cette élimination du fer se fait par précipitation par refroidissement. On précipite du FeSn₂ par refroidissement entre 250 et 450 °C, notamment entre 270 et 350°C . On peut également séparer chimiquement le fer de l'étain dans un réacteur approprié

Par ailleurs, l'étain du bain de métal fondu risquant de se charger en plomb, on peut prévoir de prélever l'étain par une canalisation pour l'amener à une station de traitement pour éliminer le plomb. Cette élimination peut se faire par retraitement chimique.

Ainsi l'invention concerne également un procédé de flottage comprenant une station (ou unité) de traitement, notamment d'épuration de l'étain du bain de flottage (bain de métal fondu), associée-audit bain.

L'étain, éventuellement débarrassé du plomb et/ou du fer est ensuite réinjecté dans le bain. Le cas échéant, on réchauffe l'étain traité avant de le réinjecter si sa température a baissé lors du traitement. Le réchauffement fait approcher tant que possible la température de l'étain à réinjecter de celle du bain au point de ré injection.

L'installation de flottage est alimentée en amont en verre fondu. Ce verre fondu est préparé par fusion de matières premières dans au moins un four de fusion situé en amont de l'installation de flottage. Ces matières premières peuvent comprendre : calcin, Pb₂O₃, silice, sable, sable riche en Zr (précurseur de ZrO₂), Carbonate de Baryum (précurseur de BaO), KOH (précurseur de K₂O) etc.

A titre d'exemple de four de fusion, on peut utiliser deux cuves en série, la deuxième cuve étant à une température plus basse que la première et étant alimentée par l'oxyde de plomb. En particulier, on peut utiliser le dispositif des deux cuves suivantes en série :,
- la première étant équipée de brûleurs immergés portant le four entre 1100 et 1300°C, alimentée par exemple notamment en calcin, carbonate de Ba, et éventuellement d'autres matières premières, le tout représentant par exemple entre 30 et 70% de la tirée totale, une cheminée permettant l'évacuation des gaz formés,
- la seconde étant équipée d'électrodes en SnO₂ maintenant le four entre 800°C et 1200°C et ne comprenant pas d'évacuation de fumées, alimentée par la composition provenant de la première cuve ainsi qu'en oxyde de plomb, et éventuellement d'autres matières premières, la composition ainsi obtenue alimentant l'installation de flottage.

L'introduction de l'oxyde de plomb dans la seconde cuve moins chaude et sans cheminée, évite les envols d'oxyde de plomb. L'oxyde de plomb est en effet nocif et il convient d'éviter son évaporation et sa pénétration dans l'environnement extérieur. La deuxième cuve peut être équipée d'un agitateur procurant une homogénéisation thermique et en composition. Elle peut également ne pas être équipée d'un agitateur mais dans ce cas, on prévoit tout de même d'homogénéiser (en température et en composition) le verre, dans le canal d'écoulement le menant à l'installation de flottage, ledit canal étant alors muni d'au moins un agitateur, ou dans une cellule de mélange muni d'au moins un agitateur placée entre la deuxième cuve et l'installation de flottage.

Ainsi, selon une variante, avant l'installation de flottage, le verre peut être fondu dans un four comprenant au moins un brûleur immergé. Notamment, le four peut comprendre au moins deux cuves en série, la deuxième cuve étant alimentée par de l'oxyde de plomb. Notamment, la première cuve peut être équipée d'au moins un brûleur immergé et être alimentée par les matières premières autres que l'oxyde de plomb. En particulier, la deuxième cuve est avantageusement à une température plus basse que la première cuve.

Le verre est généralement à une température comprise entre 700 et 900°C en amont de l'installation de flottage, et entre 400 et 600°C en aval de l'installation de flottage. Globalement, on peut dire que le verre flotté est entre 400 et 900°C et plus particulièrement entre 500 et 800°C. La température du bain de métal fondu est plus basse que la température d'un bain de métal fondu d'une installation de flottage d'un verre silicosodocalcique sans plomb. On peut considérer que-la température du verre est sensiblement la même que celle du bain au même endroit.

Le verre fabriqué par le procédé selon l'invention est enrichi en étain du côté ayant été en contact avec le bain de métal fondu, par exemple à une concentration pouvant atteindre 2% en poids, par exemple 0,01 à 2% en poids, au moins dans le premier micromètre de la peau et même dans quelques premiers micromètres de la peau. La teneur en étain forme un gradient de concentration diminuant de la surface vers le coeur du vitrage.

Le procédé selon l'invention permet la réalisation de verre plat d'épaisseur allant de 1 à 25 mm d'épaisseur, notamment entre 3 et 14 mm d'épaisseur. L'épaisseur peut donc être inférieure à 5 mm et même inférieure à 4 mm.

Sur le bain de métal, le ruban peut avoir une largeur allant de 0,90 à 6 mètres et plus généralement de 1 à 4 mètres. En sortant de l'installation de formage, le ruban passe dans une étenderie pour le refroidir progressivement, à la suite de quoi le ruban est découpé longitudinalement (découpe de bandes des deux bords) et transversalement en panneaux comprenant deux faces principales et une tranche. Chaque face principale de ces panneaux peut par exemple avoir une surface allant de 0,15 m² à 20 m².

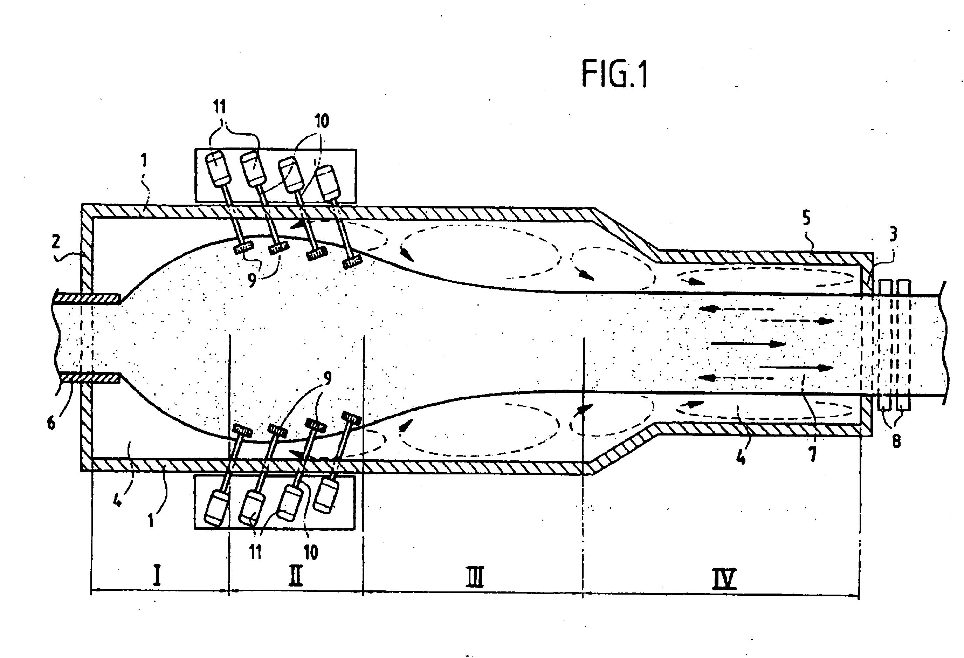

Sur la figure 1, est représentée une cuve allongée pour la fabrication du verre par flottage. La cuve comprend des parois latérales 1 et des parois d'extrémités 2 et 3, respectivement à l'entrée et à la sortie de la cuve. La cuve, contenant un bain d'étain 4 en fusion, présente une partie avale de largeur moindre 5. Le verre fondu est déversé sur le bain à son extrémité d'entrée, à partir d'un canal de distribution 6 disposé au-dessus de la paroi d'entrée de la cuve. Des régulateurs de température (comme des résistances chauffantes en SiC), non représentés sur les figures, sont incorporés au toit qui surmonte le bain. Ces régulateurs établissent le régime thermique du verre en le maintenant à l'état déformable jusqu'en fin de zone d'étirage. Le bain comporte dans la fabrication de verre plusieurs zones représentées sur la figure 1 et que l'on peut distinguer de la façon suivante :
- une zone I d'étalement du verre à la suite de sa coulée sur le bain de métal fondu, en amont;
- une zone Il dans laquelle le ruban de verre en formation subit des forces longitudinales et dirigées vers l'extérieur sous les actions des rouleaux extracteurs 8 et des rouleaux de bords 9. Dans cette zone, l'étirage du verre commence et celui-ci s'amincit.
- une zone III où le ruban de verre prend sa forme définitive sous l'action des rouleaux extracteurs 8.
Les zones II et III forment ensemble la zone d'étirage.
- une zone IV de consolidation où le ruban de verre figé se refroidit progressivement.

Après avoir été déversé sur le bain de métal fondu, le verre s'étale librement au maximum dans la zone I. Il se forme ainsi un ruban 7 qui se déplace vers l'aval sous l'effet de la traction des rouleaux extracteurs 8 extérieurs à la cuve. L'épaisseur désirée est ensuite obtenue par l'action combinée de la traction des rouleaux extracteurs 8 et des rouleaux de bord moletés 9, généralement en acier, légèrement obliques par rapport à la perpendiculaire à la direction d'avance du ruban. Ces rouleaux de bord sont reliés par arbre 10 à des moteurs 11 qui les entraînent généralement à des vitesses différentes selon leur position, et croissantes vers l'aval. Ces rouleaux appliquent aux bords du ruban de verre en cours de formation des forces s'opposant à un rétrécissement du ruban de verre. Le ruban de verre subit ainsi un étirage dans la zone de ces rouleaux de bord. Le ruban de verre est ensuite amené à l'épaisseur désirée par un étirage dû aux rouleaux extracteurs.

Le ruban passe ensuite dans l'étenderie destinée à refroidir très progressivement et de façon homogène le verre. Le ruban est ensuite découpé en panneaux de façon classique par découpe transverse et longitudinale.

L'invention concerne également l'utilisation du verre plat selon l'invention à la protection contre les rayons X.

## Revendications

1. Procédé de fabrication de verre plat riche en oxyde de plomb comprenant le flottage en continu dans une installation de flottage à l'atmosphère gazeuse neutre, d'un verre comprenant au moins 30 % en poids d'oxyde de plomb sur un bain d'un métal fondu à la densité supérieure à celle du verre.

2. Procédé selon la revendication précédente, **caractérisé en ce que** l'atmosphère gazeuse neutre contient moins de 5 vpm d'oxygène.

3. Procédé selon l'une des revendications précédentes **caractérisé en ce que** l'atmosphère gazeuse neutre contient essentiellement de l'azote.

4. Procédé selon l'une des reveridications précédentes, **caractérisé en ce que** la température du bain de métal fondu est plus basse que la température d'un bain de métal fondu d'une installation de flottage d'un verre silicosodocalcique sans plomb.

5. Procédé selon la revendication précédente, **caractérisé en ce que** la température du verre flotté est comprise entre 500 et 800°C.

6. Procédé selon l'une des revendications précédentes, **caractérisé en ce qu'**une station de traitement du métal fondu est associée audit bain.

7. Procédé selon l'une des revendications précédentes **caractérisé en ce que** le verre comprend au moins 45% en poids d'oxyde de plomb.

8. Procédé selon la revendication précédente **caractérisé en ce que** le verre comprend au moins 60% en poids d'oxyde de plomb.

9. Procédé selon l'une des revendications précédentes **caractérisé en ce que** le verre a une densité allant de 4 à 6.

10. Procédé selon la revendication précédente **caractérisé en ce que** le verre a une densité allant de 4,3 à 5,5.

11. Procédé selon l'une des revendications précédentes, **caractérisé en ce qu'**avant l'installation de flottage, le verre est fondu dans un four comprenant au moins un brûleur immergé.

12. Procédé selon la revendication précédente, **caractérisé en ce que** le four comprend au moins deux cuves en série, la deuxième cuve étant alimentée par de l'oxyde de plomb.

13. Procédé selon la revendication précédente, **caractérisé en ce que** la première cuve est équipée d'au moins un brûleur immergé et est alimentée par les matières premières autres que l'oxyde de plomb.

14. Procédé selon l'une des deux revendications précédentes, **caractérisé en ce que** la deuxième cuve est à une température plus basse que la première cuve.

15. Verre plat comprenant au moins 30 % en poids d'oxyde de plomb PbO, enrichi sur une face en étain.

16. Verre selon la revendication précédente **caractérisé en ce qu'**il comprend au moins 60% en poids d'oxyde de plomb.

17. Utilisation du verre de l'une des revendications de verre précédentes à la protection contre les rayons X.

## Claims

1. A process for manufacturing flat glass rich in lead oxide, comprising the continuous floating, in a float plant with a neutral gaseous atmosphere, of a glass comprising at least 30% lead oxide by weight on a bath of molten metal having a higher density than that of the glass.

2. The process as claimed in the preceding claim, **characterized in that** the neutral gaseous atmosphere contains less than 5 ppmv oxygen.

3. The process as claimed in one of the preceding claims, **characterized in that** the neutral gaseous atmosphere contains essentially nitrogen.

4. The process as claimed in one of the preceding claims, **characterized in that** the temperature of the bath of molten metal is lower than the temperature of a bath of molten metal in a float plant for a soda-lime-silica glass containing no lead.

5. The process as claimed in the preceding claim, **characterized in that** the temperature of the float glass is between 500 and 800°C.

6. The process as claimed in one of the preceding claims, **characterized in that** a molten metal treatment station is associated with said bath.

7. The process as claimed in one of the preceding claims, **characterized in that** the glass comprises at least 45% lead oxide by weight.

8. The process as claimed in the preceding claim, **characterized in that** the glass comprises at least 60% lead oxide by weight.

9. The process as claimed in one of the preceding claims, **characterized in that** the glass has a density ranging from 4 to 6.

10. The process as claimed in the preceding claim, **characterized in that** the glass has a density ranging from 4.3 to 5.5.

11. The process as claimed in one of the preceding claims, **characterized in that,** before the float plant, the glass is melted in a furnace that includes at least one submerged burner.

12. The process as claimed in the preceding claim, **characterized in that** the furnace comprises at least two tanks in series, the second tank being fed with lead oxide.

13. The process as claimed in the preceding claim, **characterized in that** the first tank is equipped with at least one submerged burner and is fed with the batch materials other than lead oxide.

14. The process as claimed in either of the two preceding claims, **characterized in that** the second tank is at a lower temperature than the first tank.

15. A flat glass comprising at least 30% lead oxide PbO by weight, enriched on one face with tin.

16. The glass as claimed in the preceding claim, **characterized in that** it comprises at least 60% lead oxide by weight.

17. The use of the glass of one of the preceding glass claims for protection against X-rays.

## Patentansprüche

1. Verfahren zur Herstellung eines bleioxidreichen Flachglases, welches das kontinuierliche Aufschwimmen eines Glases, das mindestens 30 Gew.-% Bleioxid enthält, auf einem Bad aus einer Metallschmelze mit einer höheren Dichte als derjenigen des Glases in einer Floatglasanlage mit neutraler Gasatmosphäre umfasst.

2. Verfahren nach dem vorhergehenden Anspruch, **dadurch gekennzeichnet, dass** die neutrale Gasatmosphäre weniger als 5 vpm Sauerstoff enthält.

3. Verfahren nach einem der vorhergehenden Ansprüche, **dadurch gekennzeichnet, dass** die neutrale Gasatmosphäre im Wesentlichen Stickstoff enthält.

4. Verfahren nach einem der vorhergehenden Ansprüche, **dadurch gekennzeichnet, dass** die Temperatur des Metallschmelzebades niedriger als die Temperatur eines Metallschmelzebades einer Floatglasanlage für ein bleifreies Kalk-Natron-Silicatglas ist.

5. Verfahren nach dem vorhergehenden Anspruch, **dadurch gekennzeichnet, dass** die Temperatur des Floatglases 500 bis 800 °C beträgt.

6. Verfahren nach einem der vorhergehenden Ansprüche, **dadurch gekennzeichnet, dass** mit dem Bad eine Station für die Behandlung der Metallschmelze verbunden ist.

7. Verfahren nach einem der vorhergehenden Ansprüche, **dadurch gekennzeichnet, dass** das Glas mindestens 45 Gew.-% Bleioxid enthält.

8. Verfahren nach dem vorhergehenden Anspruch, **dadurch gekennzeichnet, dass** das Glas mindestens 60 Gew.-% Bleioxid enthält.

9. Verfahren nach einem der vorhergehenden Ansprüche, **dadurch gekennzeichnet, dass** das spezifische Gewicht des Glases 4 bis 6 beträgt.

10. Verfahren nach dem vorhergehenden Anspruch, **dadurch gekennzeichnet, dass** das spezifische Gewicht des Glases 4,3 bis 5,5 beträgt.

11. Verfahren nach einem der vorhergehenden Ansprüche, **dadurch gekennzeichnet, dass** das Glas vor der Floatglasanlage in einem Ofen, der mindestens einen Tauchbrenner enthält, erschmolzen wird.

12. Verfahren nach dem vorhergehenden Anspruch, **dadurch gekennzeichnet, dass** der Ofen mindestens zwei in Reihe geschaltete Wannen umfasst, wobei der zweiten Wanne Bleioxid zugeführt wird.

13. Verfahren nach dem vorhergehenden Anspruch, **dadurch gekennzeichnet, dass** die erste Wanne mit mindestens einem Tauchbrenner ausgerüstet ist und mit den Glasrohstoffen versorgt wird, die kein Bleioxid sind.

14. Verfahren nach einem der zwei vorhergehenden Ansprüche, **dadurch gekennzeichnet, dass** die Temperatur der zweiten Wanne niedriger als diejenige der ersten Wanne ist.

15. Flachglas, das mindestens 30 Gew.-% Bleioxid, PbO, enthält und auf einer Seite mit Zinn angereichert ist.

16. Glas nach dem vorhergehenden Anspruch, **dadurch gekennzeichnet, dass** es mindestens 60 Gew.-% Bleioxid enthält.

17. Verwendung des Glases nach einem der vorhergehenden Glas-Ansprüche für den Schutz vor Röntgenstrahlung.
